(19) **Europäisches Patentamt**

**European Patent Office**

**Office européen des brevets**

(11) **EP 1 180 680 A1**

(12) # DEMANDE DE BREVET EUROPEEN

(43) Date de publication:
**20.02.2002 Bulletin 2002/08**

(51) Int Cl.$^7$: **G01N 21/64**

(21) Numéro de dépôt: **01402118.2**

(22) Date de dépôt: **06.08.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **08.08.2000 FR 0010426**

(71) Demandeur: **COMMISSARIAT A L'ENERGIE ATOMIQUE**
**75752 Paris Cédex 15 (FR)**

(72) Inventeurs:
- **Peltie, Philippe**
  **38760 Saint Paul de Varces (FR)**
- **Campagnolo, Raymond**
  **38100 Grenoble (FR)**
- **Berger, Michel**
  **38170 Seyssinet-Pariset (FR)**

(74) Mandataire: **Signore, Robert**
**c/o BREVATOME 3, rue du Docteur Lanceraux**
**75008 Paris (FR)**

(54) **Dispositif d'imagerie de fluorescene en lumière polarisée**

(57) L'invention concerne un dispositif d'imagerie de fluorescence en lumière polarisée comprenant une structure de micro canaux en parallèle (4) pour contenir des constituants à analyser. Un dispositif de couplage (2, 5) permet de guider la lumière polarisée dans les micro canaux.

L'invention s'applique à l'analyse de séquences d'acides nucléiques marqués.

FIG. 1

**Description**

Domaine technique et art antérieur

L'invention concerne un dispositif d'imagerie de fluorescence en lumière polarisée.

La fluorescence polarisée est utilisée pour mettre en évidence le mouvement de molécules et, partant, la dimension de molécules. La polarisation de la lumière de fluorescence ré-émise par une molécule est en effet d'autant moins modifiée par rapport à la polarisation de la lumière d'excitation reçue par la molécule que la molécule est de grande dimension.

La fluorescence polarisée a longtemps été utilisée pour mettre en évidence les mouvements partiels d'un polymère en marquant le polymère d'une substance émissive fluorescente.

Les applications actuelles concernent principalement les interactions entre protéines (étude des réactions antigène-anticorps en immunologie, des réactions biochimiques telles que les réactions enzymes-substrats) et l'étude des membranes.

La fluorescence polarisée, de même que le transfert d'énergie, sont également utilisés pour séparer des molécules (cytométrie par exemple).

Plus récemment, la fluorescence polarisée a été utilisée pour l'analyse de séquences d'acides nucléiques marqués. Ainsi, peut-on citer l'article *"Fluorescence Polarisation In Homogeneous Nucleic Acid Analysis"* de Chen, Levine et Kwok, Genome Research, 09/98, et l'article *« A homogeneous method for genotyping with fluorescence polarization »,* Neil J. Gibson, Helen L. Gillard, David Whitcombe, Richard M. Ferrie, Clive R. Newton, et Stephen Little, Clinical Chemistry 43 :8, 1336-1341.

En ce qui concerne les applications relatives aux interactions entre protéines, deux articles peuvent être cités :

- *"Fluorescence Anisotropy : Rapid, Quantitative* Assay *for Protein-DNA and Protein-Protein Interaction"* de Tomasz Heyduk, Yuexing Ma, Hong Tang et Richard H. Ebright, Methods in Enzymology, vol. 274, et
- *"DNA detection by strand displacement amplification and fluorescence polarization with signal enhancement using a DNA binding protein"* de G.Terrance Walker, G.Preston Linn et James G. Nadeau, Nucleic Acids Research, 1996, vol 24, n°2.

On peut également citer deux brevets européens concernant la méthode de fluorescence polarisée :

- le brevet EP 0 382 433 B1 intitulé *"Detection of nucleic acid séquences using fluorescence polarisation",* et
- le brevet EP 0 678 581 A1 intitulé *"Fluorescence polarization detection of nucleic acid amplification".*

De nombreux dispositifs permettant de mettre en oeuvre des mesures de fluorescence polarisée sont connus de l'art antérieur. On peut citer, par exemple, les spectrophotomètres munis d'accessoires de polarisation. Les spectres étudiés sont alors des spectres à monochromateurs devant lesquels sont placés des filtres de polarisation. La lumière blanche est polarisée verticalement avant d'atteindre l'échantillon et la fluorescence de l'échantillon est analysée alternativement avec une polarisation verticale puis horizontale. Le taux de polarisation P est donné par la formule ci-dessous:

$$P = \frac{I_{II} - GI_{\perp}}{I_{II} + GI_{\perp}}$$

où $I_{II}$ et $I_{\perp}$ sont, respectivement, les intensités mesurées en polarisation verticale et horizontale, et G un facteur de correction qui tient compte du déséquilibre naturel entre polarisations verticale et horizontale dû au fait que les monochromateurs ne donnent pas les mêmes valeurs suivant les deux axes de polarisation.

Ces spectres présentent l'avantage de permettre une exploration de toute la plage spectrale, aussi bien en émission qu'en excitation. Ils manquent cependant de sensibilité, *car* les monochromateurs sont des films très sélectifs qui présentent une atténuation relativement élevée.

Il existe également les lecteurs de plaques à puits. Les lecteurs de plaque à puits fonctionnent soit avec une lampe source blanche filtrée, soit avec des lasers.

La lecture dans les puits tend à dépolariser la lumière (présence d'un ménisque liquide-air). Il s'en suit que leurs performances en polarisation sont limitées.

Il existe également des bancs d'étude à deux voies simultanées. On peut alors balayer n points de mesures, mais ceci nécessite un mouvement mécanique et un dispositif de synchronisation qui rendent la mise en oeuvre de ces bancs délicate en milieu industriel.

Le dispositif d'imagerie par fluorescence selon l'invention ne présente pas les inconvénients mentionnés ci-dessus.

Exposé de l'invention

En effet, l'invention concerne un dispositif d'imagerie par fluorescence comprenant des premiers moyens pour contenir des constituants à analyser, des deuxièmes moyens pour éclairer par une lumière polarisée les constituants à analyser et des troisièmes moyens pour lire une lumière de fluorescence émise par les constituants sous l'action de la lumière polarisée. Les premiers moyens sont constitués d'une structure de micro canaux en parallèle et les deuxièmes moyens comprennent au moins un dispositif de couplage pour guider la lumière polarisée dans les micro canaux.

Le dispositif selon l'invention permet de discriminer facilement des molécules de tailles différentes. Il est ainsi possible, par exemple, de discriminer une séquence de 16 à 20 acides nucléiques marqués d'un fluorophore dans une solution contenant des oligonucléotides non marqués et des fluorophores à l'état libre. Ceci peut être utilisé dans les réactions de génotypage pour l'étude du polymorphisme.

Selon le mode de réalisation préférentiel de l'invention , la polarisation de la lumière qui éclaire les constituants à analyser est une polarisation verticale.

Brève description des figures

D'autres caractéristiques et avantages de l'invention apparaîtront à la lecture d'un mode de réalisation préférentiel de l'invention fait en référence aux figures ci-annexées parmi lesquelles :

- la figure 1 représente un premier exemple de dispositif de couplage de lumière polarisée dans une structure de micro canaux selon l'invention ;
- la figure 2 représente un deuxième exemple de dispositif de couplage de lumière polarisée dans une structure de micro canaux selon l'invention ;
- la figure 3 représente un troisième exemple de dispositif de couplage de lumière polarisée dans une structure de micro canaux selon l'invention ;
- la figure 4 représente un premier exemple de dispositif de lecture de lumière fluorescente polarisée selon l'invention;
- la figure 5 représente un deuxième exemple de dispositif de lecture de lumière fluorescente polarisée selon l'invention,
- la figure 6 représente un troisième exemple de dispositif de lecture de lumière fluorescente polarisée selon l'invention ;
- la figure 7 représente, de façon symbolique, une image de fluorescence selon l'invention obtenue à l'aide d'un dispositif tel que le dispositif de la figure 6 ;
- la figure 8 représente un quatrième exemple de dispositif de lecture de lumière fluorescente polarisée selon l'invention ;
- la figure 9 représente, de façon symbolique, une image de fluorescence selon l'invention obtenue à l'aide d'un dispositif tel que le dispositif de la figure 8.

Sur toutes les figures les mêmes références désignent les mêmes éléments.

Description détaillée de modes de mise en oeuvre de l'invention

Le dispositif selon l'invention permet de faire l'imagerie de fluorescence polarisée de composants distribués dans N micro canaux en parallèle, N étant un nombre entier pouvant, par exemple, être égal à 100. Les micro canaux peuvent soit être gravés dans une puce support en verre ou en plastique de bonne qualité optique ou encore en silicium, soit être constitués de capillaires souples.

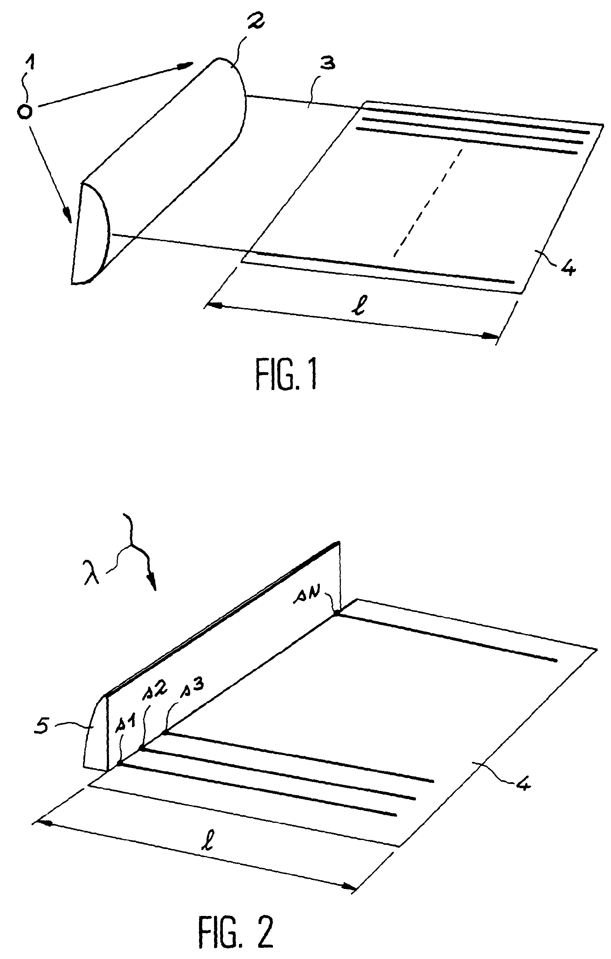

Selon l'invention, un dispositif de couplage permet de guider la lumière dans les N micro canaux en parallèle et, ainsi, d'obtenir N tronçons fluorescents dont la longueur 1 peut être comprise, par exemple, entre 1 mm et 10 mm. A titre d'exemple non limitatif, les micro canaux ont une section de 200µm et leur pas est de 400µm. Le dispositif de couplage peut être une lentille cylindrique comme représenté en figure 1 ou un réseau de diffraction comme représenté en figure 2.

Sur la figure 1, une lentille cylindrique 2 éclairée par une source laser 1 permet de constituer un mince plan de lumière laser 3 qui pénètre dans la structure 4 de micro canaux. Par "source laser", on entend aussi bien laser que micro laser.

Sur la figure 2, un réseau de diffraction 5 éclairé par une lumière de longueur d'onde $\lambda$ permet de générer N points source distincts s1, s2, s3, ..., sN. Chaque point source est aligné avec un micro canal. Cette dernière configuration permet avantageusement d'éviter les problèmes de diffusion parasite et les problèmes de diaphonie entre micro canaux.

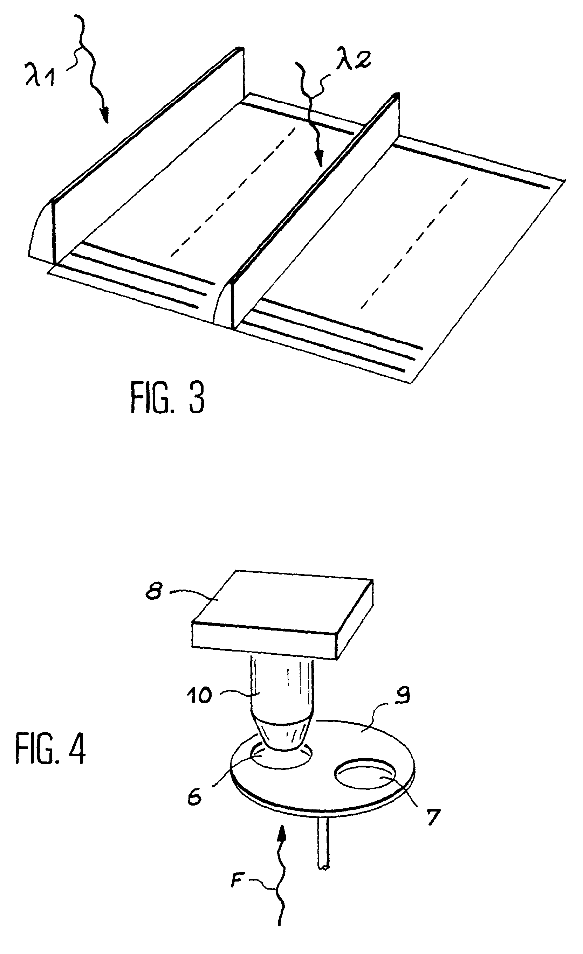

La figure 3 représente un troisième exemple de dispositif de couplage de lumière polarisée dans une structure de micro canaux selon l'invention.

Selon ce troisième exemple, la fluorescence de deux marqueurs distincts est imagée. La structure de micro canaux est alors constituée, par exemple, de deux structures élémentaires telles que représentées en figure 2. Une lumière de longueur d'onde $\lambda$1 excite les marqueurs contenus dans les micro canaux de la première structure élémentaire et une lumière de longueur d'onde $\lambda$2 excite les marqueurs contenus dans les micro canaux de la deuxième structure élémentaire.

Une structure telle que représentée en figure 3 est utilisée, par exemple, dans les réactions de génotypage pour l'étude du polymorphisme. Un premier marqueur est alors choisi parmi les fluorescéines (longueur d'onde d'excitation $\lambda$1 sensiblement comprise entre 488nm et 514nm et longueur d'onde d'émission sensiblement égale à 520nm) et le second marqueur est choisi parmi les rhodamines (longueur d'onde d'excitation $\lambda$2 sensiblement comprise entre 530nm et 550nm et longueur d'onde d'émission sensiblement égale à 580nm). A titre d'exemple non limitatif, le premier marqueur est du FAM et le second marqueur du TAMRA.

La figure 4 représente un premier exemple de dispositif de lecture de lumière fluorescente polarisée selon l'invention.

Une optique 10 et des filtres polarisants 6 et 7 permettent d'imager les N micro canaux en parallèle sur une caméra CCD (CCD pour "Charge Coupled Device"). A titre d'exemple non limitatif, les filtres polarisants 6 et 7 sont montés sur une roue à filtres 9. La lumière de fluorescence F issue des N micro canaux est alors détectée. L'image des N micro canaux est effectuée, tout d'abord, selon une première direction de polarisation, puis, dans la direction perpendiculaire à la première direction de polarisation. On obtient ainsi , canal par canal, les deux valeurs d'intensité $I_{\parallel}$ et $I_{\perp}$. La valeur de la polarisation résultante est donné par :

$$P = \frac{I_{\parallel} - I_{\perp}}{I_{\parallel} + I_{\perp}}$$

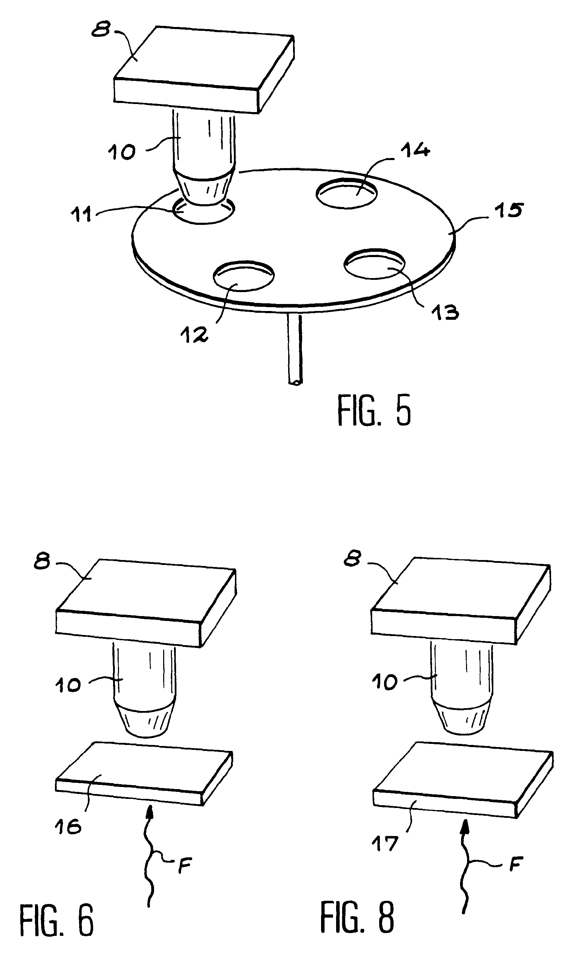

La figure 5 représente un deuxième exemple de dispositif de lecture de lumière fluorescente polarisée selon l'invention.

Selon ce deuxième exemple, deux marqueurs différents sont imagés. Il peut s'agir, par exemple, du R110 et du Tamra comme cela a été mentionné précédemment. Le dispositif comprend un objectif 10, une caméra CCD 8 et quatre filtres polarisants 11, 12, 13 et 14 montés sur une roue à filtres 15. Les filtres 11 et 12 filtrent respectivement la polarisation verticale et la polarisation horizontale de la lumière fluorescente issue d'un premier marqueur et les filtres 13 et 14 filtrent respectivement la polarisation verticale et la polarisation horizontale de la lumière fluorescente issue du second marqueur. Les intensités respectives $I_{\parallel}R110$, $I_{\perp}R110$, $I_{\parallel}Tamra$ et $I_{\perp}Tamra$ sont alors successivement mesurées par la caméra 8. A cette fin, la roue à filtres 15 est commutée en synchronisation avec les deux faisceaux laser d'excitation (non représentés sur la figure) qui éclairent successivement les micro canaux.

La figure 6 représente un troisième exemple de dispositif de lecture de lumière fluorescente polarisée selon l'invention.

En plus de l'objectif 10 et de la caméra 8, le dispositif de lecture comprend des moyens pour permettre, pour chaque marqueur, la mesure simultanée des intensités $I_{\parallel}$ et $I_{\perp}$. Les polarisations verticale et horizontale sont alors séparées et projetées sur deux zones distinctes de la caméra. Les deux polarisations qui sont contenues dans la lumière fluorescente F sont séparées par un cristal biréfringent 16, par exemple un barreau de $LiNbO_3$. Une première image est alors formée dans une première couleur (premier marqueur) et une deuxième image est formée dans une deuxième couleur (deuxième marqueur). Les images sont formées successivement, suite à la commutation des faisceaux laser d'excitation. Bien entendu, ceci est donné à titre d'exemple et le dispositif peut fonctionner avec une seule couleur (dans ce cas, un seul marqueur est utilisé afin de détecter un type d'acide nucléique) mais aussi avec trois voire quatre couleurs (dans ce cas, on utilise le nombre correspondant de marqueurs).

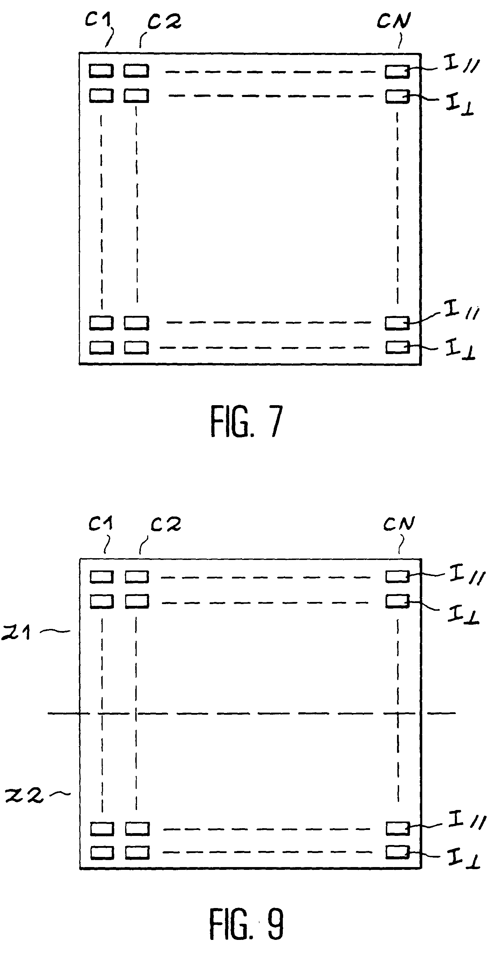

L'image de fluorescence obtenue dans une couleur est représentée en figure 7. L'image de fluorescence Cj (j=1, 2, ..., N) d'un micro canal est ainsi constituée d'une succession de paires de pixels, chaque paire de pixels représentant une même zone de micro canal. Les pixels d'une même paire ont pour intensités respectives les intensités $I_{\parallel}$ et $I_{\perp}$.

La figure 8 représente un quatrième exemple de dispositif de lecture de lumière fluorescente selon l'invention.

Le dispositif de lecture selon le quatrième exemple de réalisation de l'invention comprend des moyens pour former une image de fluorescence de la puce, simultanément dans les deux polarisations et dans les deux couleurs.

Sur l'image formée, les deux couleurs sont séparées en deux zones distinctes. La séparation des couleurs est effectuée en décalant les deux faisceaux laser qui éclairent la structure de micro canaux. Par ailleurs, un cristal biréfringent, par exemple un cristal de calcite 17, est interposé entre la structure de micro canaux et l'objectif 10. Le cristal de calcite 17 permet une séparation des polarisations.

L'image obtenue par un dispositif selon la figure 8 est représentée en figure 9.

L'image de fluorescence Cj (j=1, 2, ..., N) de chaque micro canal est répartie en deux zones : une zone Z1 relative à une première couleur (premier marqueur) et une zone Z2 relative à une deuxième couleur (deuxième marqueur). De même que précédemment, chaque image Cj est constituée d'une succession de paires de pixels, chaque paire de pixels représentant une même zone de micro canal, les pixels d'une même paire ayant pour intensités respectives les intensités $I_{\parallel}$ et $I_{\perp}$.

Ci-dessous est donné, à titre d'exemple non limitatif, le dimensionnement d'un dispositif d'imagerie de fluorescence qui a été réalisé pour mettre en oeuvre l'invention :

- taille de la barrette CCD : 1024 x 60 (24,6 x 1,44mm$^2$) ;
- taille des pixels de détection de la barrette CCD : 24 x 24 $\mu m^2$ ;
- micro canaux : largeur 200$\mu m$, pas 400$\mu m$, encombrement total selon l'axe des micro canaux 40mm, zone de fluorescence selon l'axe des micro canaux 1mm,
- grossissement 0,5 ;
- champ d'image sur la caméra # 30s ;
- nombre de pixels par micro canal : 4 x 20 ;
- ouverture numérique de l'optique : 0,1 avec une focale de 10mm ouverte à f/2
- puissance de la lumière laser par micro canal : 100$\mu W$.

**Revendications**

**1.** Dispositif d'imagerie par fluorescence comprenant des premiers moyens pour contenir des constituants à analyser, des deuxièmes moyens pour éclairer par une lumière polarisée les constituants à analyser et des troisièmes moyens pour lire une lumière de fluorescence émise par les constituants sous l'action de la lumière polarisée, **caractérisé en ce que** les premiers moyens sont constitués d'une structure de micro canaux en parallèle (4) et **en ce que** les deuxièmes moyens comprennent au moins un dispositif de couplage (2, 5) pour guider la lumière polarisée dans les micro canaux.

2. Dispositif selon la revendication 1, **caractérisé en ce que** les micro canaux sont gravés dans une puce support en verre ou en plastique présentant une bonne qualité optique ou en silicium.

3. Dispositif selon la revendication 1, **caractérisé en ce que** les micro canaux sont des capillaires souples.

4. Dispositif selon l'une quelconque des revendications précédentes **caractérisé en ce que** le dispositif de couplage comprend un réseau de diffraction (5).

5. Dispositif selon l'une quelconque des revendications 1 à 3, **caractérisé en ce que** le dispositif de couplage comprend une lentille cylindrique (2).

6. Dispositif selon l'une quelconque des revendications précédentes, **caractérisé en ce que** les deuxièmes moyens comprennent un laser ou un micro laser pour éclairer la totalité de la structure de micro canaux (4) et **en ce que** les troisièmes moyens comprennent un premier filtre polarisant (6, 11, 13) pour filtrer, dans un premier temps, une première composante de la lumière fluorescente polarisée selon une première direction et un deuxième filtre polarisant (7, 12, 14) pour filtrer, dans un deuxième temps, une deuxième composante de la lumière fluorescente polarisée selon une direction perpendiculaire à la première direction.

7. Dispositif selon la revendication 6, **caractérisé en ce qu'**il comprend une roue à filtres (9, 15) pour commuter le premier filtre (6, 11, 13) et le deuxième filtre (7, 12, 14).

8. Dispositif selon l'une quelconque des revendications 1 à 5, **caractérisé en ce que** les deuxièmes moyens comprennent un laser ou micro laser pour éclairer la totalité de la structure de micro canaux (4) et **en ce que** les troisièmes moyens comprennent un cristal biréfringent (16, 17) pour séparer la lumière de fluorescence émise selon deux composantes polarisées perpendiculairement l'une par rapport à l'autre.

9. Dispositif selon l'une quelconque des revendications 6 à 8, **caractérisé en ce que** le laser ou le micro laser émet à une longueur d'onde ($\lambda$1) sensiblement comprise entre 488nm et 514nm ou à une longueur d'onde ($\lambda$2) sensiblement comprise entre 550nm et 580nm.

10. Dispositif selon l'une quelconque des revendications 1 à 5, **caractérisé en ce que** les deuxièmes moyens comprennent un premier laser ou micro laser pour éclairer une première zone de la structure de micro canaux (4) et un deuxième micro laser pour éclairer, simultanément, une deuxième zone de la structure de micro canaux (4) et **en ce que** les troisièmes moyens comprennent un cristal biréfringent (16, 17) pour séparer la lumière de fluorescence émise selon deux composantes polarisées perpendiculairement l'une par rapport à l'autre.

11. Dispositif selon la revendication 10, **caractérisé en ce que** le premier laser ou micro laser émet à une longueur d'onde ($\lambda$1) sensiblement comprise entre 488nm et 514nm et le deuxième micro laser émet à une longueur d'onde ($\lambda$2) sensiblement comprise entre 530nm et 550nm.

12. Dispositif selon l'une quelconque des revendications 8 à 11, **caractérisé en ce que** le cristal biréfringent est un cristal de LiNbO$_3$ ou un cristal de calcite.

FIG. 1

FIG. 2

FIG. 3

FIG. 4

7

FIG. 5

FIG. 6

FIG. 8

FIG. 7

FIG. 9

**Office européen des brevets**

## RAPPORT DE RECHERCHE EUROPEENNE

Numéro de la demande

EP 01 40 2118

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 4 122 348 A (BRUCK ABRAHAM) 24 octobre 1978 (1978-10-24) * colonne 2, ligne 34 - colonne 3, ligne 9 * | 1 | G01N21/64 |
| A | EP 0 959 343 A (SUISSE ELECTRONIQUE MICROTECH) 24 novembre 1999 (1999-11-24) * alinéa [0042]; figure 7 * | 1 | |
| A | WO 99 40415 A (NOVARTIS ERFIND VERWALT GMBH ;NOVARTIS AG (CH); NEUSCHAEFER DIETER) 12 août 1999 (1999-08-12) * page 5, ligne 1 - page 6, ligne 2 * | 1 | |
| A | WO 97 10056 A (BECTON DICKINSON CO) 20 mars 1997 (1997-03-20) * page 21, ligne 5 - ligne 19 * | 1 | |

**DOMAINES TECHNIQUES RECHERCHES (Int.Cl.7)**

G01N

Le présent rapport a été établi pour toutes les revendications

| Lieu de la recherche | Date d'achèvement de la recherche | Examinateur |
|---|---|---|
| BERLIN | 20 novembre 2001 | Navas Montero, E |

EPO FORM 1503 03.82 (P04C02)

**ANNEXE AU RAPPORT DE RECHERCHE EUROPEENNE**
**RELATIF A LA DEMANDE DE BREVET EUROPEEN NO.**                     EP 01 40 2118

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-11-2001

| Document brevet cité au rapport de recherche | | Date de publication | Membre(s) de la famille de brevet(s) | | Date de publication |
|---|---|---|---|---|---|
| US 4122348 | A | 24-10-1978 | AUCUN | | |
| EP 0959343 | A | 24-11-1999 | FR | 2778986 A1 | 26-11-1999 |
| | | | EP | 0959343 A1 | 24-11-1999 |
| | | | US | 6312961 B1 | 06-11-2001 |
| WO 9940415 | A | 12-08-1999 | AU | 2924399 A | 23-08-1999 |
| | | | WO | 9940415 A1 | 12-08-1999 |
| | | | EP | 1057008 A1 | 06-12-2000 |
| WO 9710056 | A | 20-03-1997 | AU | 7238396 A | 01-04-1997 |
| | | | BR | 9606634 A | 11-11-1997 |
| | | | CA | 2205057 A1 | 20-03-1997 |
| | | | EP | 0790861 A1 | 27-08-1997 |
| | | | JP | 10509330 T | 14-09-1998 |
| | | | WO | 9710056 A2 | 20-03-1997 |
| | | | US | 5948673 A | 07-09-1999 |

EPO FORM P0460

Pour tout renseignement concernant cette annexe : voir Journal Officiel de l'Office européen des brevets, No.12/82